# EUROPEAN PATENT SPECIFICATION

(11) **EP 3 192 737 B1**
(45) Date of publication and mention of the grant of the patent: **02.12.2020**
(21) Application number: 16151361.9
(22) Date of filing: 14.01.2016
(51) Int. Cl.: B64C 25/60

(54) **SHOCK STRUT**
FEDERBEIN
AMORTISSEUR

(43) Date of publication of application: 19.07.2017
(73) Proprietor: Safran Landing Systems UK Ltd, Gloucester, Gloucestershire GL2 9QH (GB)
(72) Inventor: Schmidt, Robert Kyle, Cheltenham GL52 2NP (GB)
(74) Representative: Latham, Stuart Alexander

(56) References cited:
- EP-A1- 2 623 616
- WO-A1-2012/008890
- WO-A1-2012/071639
- GB-A- 2 527 203
- US-A- 2 448 266
- US-A- 3 222 905
- US-A1- 2003 128 903
- US-A1- 2007 194 172

## Description

### Field of the Invention

The present invention relates to a shock strut and in particular to a shock strut for a landing gear assembly and a method of increasing the service life of a shock strut for a landing gear assembly.

### Background of the Invention

A landing gear assembly for an aircraft is generally movable between a deployed condition, for taxiing, take-off and landing, and a stowed condition, for flight.

Landing gear assemblies include shock absorbers, known as shock struts, to absorb and damp the significant loads that are experienced by the landing gear assembly during use, particularly during landing. Such shock struts include a hollow cylinder and a piston that slides within the hollow cylinder to form a chamber within which a fluid can be compressed. The hollow cylinder and the piston each have bearing surfaces that slide relative to each other in use.

The hollow cylinder of the shock strut, commonly known as a main fitting or outer cylinder, may be manufactured from titanium, for example bare titanium, in order to minimise weight and/or to improve the corrosion resistance of the landing gear assembly. Titanium does not have good tribological properties and so titanium main fittings are prone to wear resulting from friction caused by repeated sliding of the titanium surface against the surface of the piston of the shock strut.

To overcome this disadvantage of titanium main fittings, it is known to either provide a coating, for example electroless nickel, on the inner bearing surface of the titanium main fitting to provide improved wear properties.

One disadvantage of coating titanium main fittings to improve the tribiological properties of titanium main fittings is that the coating materials are not environmentally desirable as harmful chemicals are used during processing of the coatings. Other coatings suffer the disadvantage that they are applied using a thermal spray gun, for example a detonation gun (D-gun), or using a high-velocity oxy fuel (HVOF) system, to project coating material onto a surface to be coated. The space limitations of the coating systems make coating the inner surface of the cylinder of a shock strut difficult.

An alternative approach to overcoming the poor tribological performance of titanium main fittings is to provide a non-metallic bearing surface on the piston to slide against the titanium main fitting, for example as described in US 2007/194172 A1.

Whilst employing a non-metallic bearing surface to bear directly on bare titanium improves the tribological situation compared to running a metallic bearing on bare titanium, these shock struts are still subject to titanium's propensity to wear more rapidly than other surfaces typically used in bearing applications.

### Summary of the Invention

According to a first aspect of the present invention there is provided a shock strut according to claim 1.

Providing a bearing surface that includes cold worked titanium ensures that the shock strut has improved wear properties, whilst benefitting from the weight reduction provided by the use of titanium. The present invention is also advantageous as the cold worked titanium bearing surface is more compatible with the non-metallic bearing surface of the piston. The present invention allows the provision of a shock strut that has a lower weight and longer service life than known shock struts.

The cold worked titanium may be cold worked bare titanium. The cold worked titanium may be cold worked titanium metal matrix composite.

The cold worked titanium may be peened titanium, for example the peened titanium may be shot peened or laser peened. The peened titanium may have a honed surface.

The cold worked titanium may be frettaged titanium, for example autofrettaged titanium.

The cold worked titanium is burnished titanium, for example roller burnished titanium or low plasticity burnished titanium.

The first bearing surface may include cold worked titanium.

According to a second aspect of the present invention there is provided a landing gear assembly according to claim 4.

According to a third aspect of the present invention there is provided a method of according to claim 5.

Mechanically modifying the metallic material ensures that the shock strut has improved wear properties. The present invention is also advantageous as the mechanically modified metallic bearing surface is more compatible with the non-metallic bearing surface of the piston.

The metallic material may be titanium, for example bare or uncoated titanium or a titanium-containing metal matrix composite.

The metallic material is mechanically modified by cold working.

Cold working the bearing surface, for example a titanium-containing surface, ensures that the shock strut has improved wear properties, whilst benefitting from the weight reduction provided by the use of titanium. The present invention allows the provision of a shock strut that has a lower weight and longer service life than known shock struts.

The metallic material may be cold worked by peening by shot peening or laser peening the metallic material. The method may further include honing the surface of the peened material.

By cold working and honing the metallic material, the resulting shock strut has improved wear properties resulting from improved resistance to compressive stresses, increased hardness and an improved surface finish.

The metallic material may be mechanically modified by cold working by frettaging, for example by autofrettaging.

The metallic material is mechanically modified by cold working by burnishing, for example by roller burnishing or low plasticity burnishing.

Burnishing is particularly advantageous and it allows the dual benefits of cold working and surface finishing, which surprisingly each contribute to the improved wear properties of the metallic material to be achieved in a single step
The first bearing surface may include a metallic material. The metallic material may be mechanically modified after formation of the hollow cylinder. The metallic material may be mechanically modified in situ.

These and other aspects of the present invention will become apparent from, and clarified with reference to, the embodiments described herein.

### Brief Description of the Drawings

Embodiments of the invention will now be described, by way of example only, with reference to the accompanying drawings, in which:
Figure 1 is a schematic cross sectional view of an aircraft landing gear assembly;
Figure 2 is a schematic cross sectional view of the dynamic seal assembly of the landing gear assembly of Figure 1; and
Figure 3 is a burnishing tool for mechanically modifying the inner surface of the cylinder of the landing gear assembly of Figure 1.

### Specific Description of Embodiments of the Invention

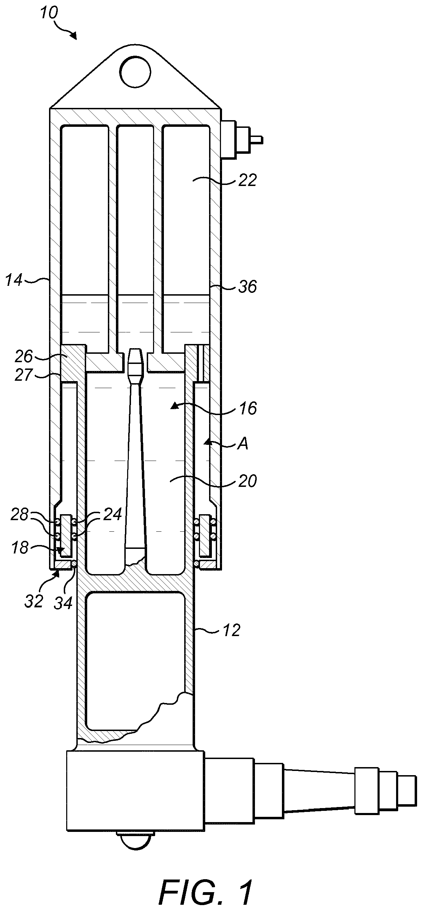

Referring first to Figure 1, a known aircraft landing gear assembly comprising an oleo-pneumatic shock absorber is shown generally at 10. The shock absorber 10 forms the main strut of the aircraft landing gear.

The shock absorber comprises an inner housing portion 12, slidably coupled in an outer housing portion 14 via bearings 26. The inner housing portion is known in the art as a 'slider', 'sliding tube', 'inner cylinder', or 'piston', and the outer housing portion is known as a 'main fitting', or 'outer cylinder'.

The sliding piston 12 and main fitting 14 together define an internal cavity or chamber 16 which contains shock absorber fluid. In the illustrated embodiment the chamber 16 contains oil 20 in a lower portion thereof and gas 22 in an upper portion thereof. The oil 20 and gas 22 together make up the shock absorber fluid.

The region where the sliding piston 12 and main fitting 14 overlap defines an annulus A between adjacent surfaces of the sliding piston 12 and main fitting 14. The annulus A varies in size in accordance with the extension state of the shock absorber 10. The term "annulus" can mean a ring-like space which has a cylindrical or non-cylindrical cross sectional profile.

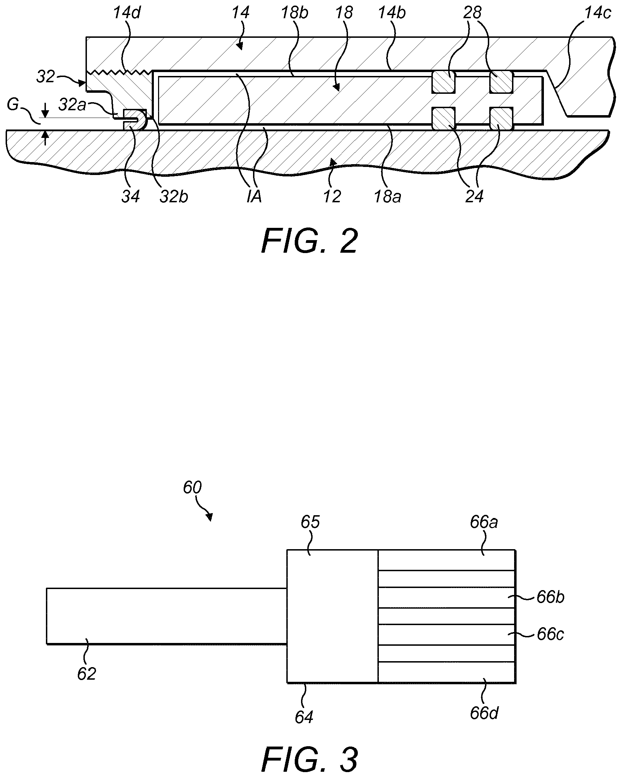

Referring additionally to Figure 2, an annular ring 18 is housed within the annulus A, adjacent to the open end of the main fitting 14. The annular ring 18 carries seals to confine the shock absorber fluid to the chamber 16.

A pair of dynamic seals 24 are mounted on the inner cylindrical face 18a of the annular ring 18 and arranged such that one or both of them press against the sliding piston 12 as the shock absorber extends and retracts, inhibiting the passage of shock absorber fluid from the chamber 16 to the outside environment.

A pair of static seals 28 are mounted on the outer cylindrical face 18b of the annular ring 18 to bear against the corresponding inner face 14b of the main fitting 14.

The annular ring 18 is locked in place within the annulus A between a shoulder portion 14c of the main fitting 14 and a gland nut 32 which is screwed into engagement with threaded end portion 14d of the main fitting 14.

In order to prevent dirt and other contaminants from entering the annulus A, an outer environmental seal 34 known in the art as a scraper seal or an extruder seal is provided. The scraper seal 34 is mounted in groove formed in the inner surface of the gland nut 32 between an outer flange 32a and an inner flange 32b so that its position is fixed relative to the cylinder 14.

The outer flange 32a also prevents larger objects from entering the annulus A through the gap between the outer surface of the sliding piston 12 and the inner surface of the main fitting 14. The outer flange 32a extends so that it is proximal to the outer surface of the piston 12, leaving a very small gap G between the inner edge of the flange 32a and the outer circumference of the sliding piston 12. This gap G may be engineered to accommodate for deflections in the sliding piston 12 during normal use such that during maximum lateral deflection of the sliding piston 12, it does not come into contact with the outer flange 32a.

The outer housing portion 14 is made from a metallic material, for example a metallic material including titanium such as bare titanium or a metal matrix composite including titanium.

The bearing surface 27 of the inner housing portion 12 is made from a non-metallic material, for example a polymer such as polytetrafluoroethylene (PTFE).

The inner surface 36 of the outer housing portion 14 is cold worked by roller burnishing prior to assembly of the aircraft landing gear assembly using a burnishing tool 60 as shown in Figure 3.

The burnishing tool 60 has a handle 62 and a mandrel 64. The mandrel has an outer surface 65 and a plurality of rollers 66a, 66b, 66c, 66d that are arranged circumferentially around the outer surface 65 of the mandrel 64.

The outer housing portion 14 is held in a lathe (not shown) and the burnishing tool 60 is inserted into the outer housing portion 14. The mandrel 64 is moved axially and radially within the outer housing portion 14 such that the rollers 66a, 66b, 66c, 66d are pressed into and smeared across the inner surface 36 of the outer housing portion 14. In this way, the inner surface 36 of the outer housing portion 14 is cold worked, thereby imparting compressive residual stresses to the inner surface 36 of the outer housing portion 14. The compressive residual stresses improve the resistance of the outer housing portion 14 to fatigue and cracking. The inner surface 36 of the outer portion 14 is also hardened and polished. The combination of compressive residual stresses, increased hardness and improved (polished) surface finish improves the tribological (wear) properties of the titanium outer housing portion 14.

In use, for example during landing of the aircraft, the shock strut 10 is compressed such that the inner housing portion 12 is moved within the outer housing portion 14 and the volume of the elongate chamber 22 is reduced. Any gas within the elongate chamber 22 is compressed and provides an energy store.

The bearing surface 27 of the inner housing portion 12 slides relative to the inner surface 36 of the outer housing portion 14. As the bearing surface 27 of the inner housing portion 12 is formed from a non-metallic material and the inner surface 36 of the outer housing portion 14 includes cold worked titanium, excessive wearing of the outer surface of the outer housing portion 14 during use is prevented.

In the example described above the outer housing portion 14 is made from a metallic material, for example a metallic material including titanium such as bare titanium or a metal matrix composite including titanium. In alternative embodiments, the cylinder may be made from aluminium, stainless steel or any other metal.

In the example described above, the inner surface 36 of the outer housing portion 14 is mechanically modified or cold worked by roller burnishing. In alternative embodiments, other burnishing methods may be employed, for example low plasticity burnishing or ball burnishing. It will also be understood that other cold working methods may be employed, for example peening or autofrettaging.

In the example described above, the formed outer housing portion 14 is cold worked. In alternative embodiments, the material from which the cylinder is formed may be cold worked prior to forming into a cylinder.

While the foregoing description has focussed on the aircraft landing gear assembly, it will be appreciated that the shock strut according to embodiments of the invention can usefully be applied to various vehicle support assemblies or other assemblies which require a shock absorber.

It should be noted that the above-mentioned embodiments illustrate rather than limit the invention, and that the scope of the invention is defined by the wording of the appended claims. In the claims, any reference signs placed in parenthesis shall not be construed as limiting the claims. The word "comprising" does not exclude the presence of elements or steps other than those listed in any claim or the specification as a whole. The singular reference of an element does not exclude the plural reference of such elements and vice-versa. Parts of the invention may be implemented by means of hardware comprising several distinct elements. In a device claim enumerating several parts, several of these parts may be embodied by one and the same item of hardware. The mere fact that certain measures are recited in mutually different dependent claims does not indicate that a combination of these measures cannot be used to advantage.

## Claims

1. A shock strut (10) for a landing gear assembly, the shock strut (10) including a hollow cylinder (14) having a first bearing surface (36) and a piston (12) having a second bearing surface (27), the piston (12) being configured to move within the hollow cylinder (14) such that the second bearing surface (27) slides relative to the first bearing surface (36), **characterised in that** one of the first and second bearing surfaces (27, 36) includes a non-metallic material and the other of the first and second bearing surfaces (27, 36) includes cold worked titanium, wherein
the cold worked titanium is burnished titanium.

2. A shock strut (10) according to claim 1, wherein the cold worked titanium is uncoated titanium or titanium metal matrix composite.

3. A shock strut (10) according to claim 1 or claim 2, wherein the burnished titanium is roller burnished titanium or low plasticity burnished titanium.

4. A landing gear assembly including a shock strut (10) according to any of claims 1 to 3.

5. A method of improving the service life of a shock strut (10) including a hollow cylinder (14) having a first bearing surface (36) and a piston (12) having a second bearing surface (27), the piston (12) being configured to move within the hollow cylinder (14) such that the second bearing surface (27) slides relative to the first bearing surface (36), wherein one of the first and second bearing surfaces (27, 36) includes a non-metallic material and the other of the first and second bearing surfaces (27, 36) includes a metallic material, the method including mechanically modifying the metallic material, **characterised in that**
the metallic material is mechanically modified by cold working and the cold working is burnishing and the metallic material includes titanium.

6. A method according to claim 5, wherein the burnishing is roller burnishing or low plasticity burnishing.

7. A method according to claim 5 or claim 6, wherein the metallic material is mechanically modified after formation of the hollow cylinder (14), for example wherein the metallic material is mechanically modified in situ.

8. A method according to any of claims 5 to 7, wherein the titanium is uncoated titanium or titanium metal matrix composite.

## Patentansprüche

1. Federbein (10) für eine Fahrwerksanordnung, wobei das Federbein (10) einen Hohlzylinder (14) mit einer ersten Lagerfläche (36) und einen Kolben (12) mit einer zweiten Lagerfläche (27) aufweist, wobei der Kolben (12) dazu ausgebildet ist, sich in dem Hohlzylinder (14) derart zu bewegen, dass die zweite Lagerfläche (27) relativ zu der ersten Lagerfläche (36) gleitet, **dadurch gekennzeichnet, dass** die erste oder die zweite Lagerfläche (27, 36) ein nichtmetallisches Material aufweist und die jeweils andere erste oder zweite Lagerfläche (27, 36) kaltbearbeitetes Titan aufweist, wobei das kaltbearbeitete Titan poliertes Titan ist.

2. Federbein (10) nach Anspruch 1, wobei das kaltbearbeitete Titan unbeschichtetes Titan oder ein Titan-Metallmatrix-Verbundwerkstoff ist.

3. Federbein (10) nach Anspruch 1 oder Anspruch 2, wobei das polierte Titan rolliertes Titan oder niedrig plastifiziert poliertes Titan ist.

4. Fahrwerksanordnung mit einem Federbein (10) nach einem der Ansprüche 1 bis 3.

5. Verfahren zur Verbesserung der Lebensdauer eines Federbeins (10), das einen Hohlzylinder (14) mit einer ersten Lagerfläche (36) und einen Kolben (12) mit einer zweiten Lagerfläche (27) aufweist, wobei der Kolben (12) dazu ausgebildet ist, sich in dem Hohlzylinder (14) derart zu bewegen, dass die zweite Lagerfläche (27) relativ zu der ersten Lagerfläche (36) gleitet, wobei die erste oder die zweite Lagerfläche (27, 36) ein nichtmetallisches Material aufweist und die jeweils andere erste oder zweite Lagerfläche (27, 36) ein metallisches Material aufweist, wobei das Verfahren das mechanische Modifizieren des metallischen Materials umfasst, **dadurch gekennzeichnet, dass**
das metallische Material durch Kaltbearbeitung modifiziert wird und die Kaltbearbeitung ein Polieren ist und wobei das metallische Material Titan umfasst.

6. Verfahren nach Anspruch 5, wobei das Polieren ein Rollieren oder ein niedrig plastifiziertes Polieren ist.

7. Verfahren nach Anspruch 5 oder Anspruch 6, wobei das metallische Material nach der Bildung des Hohlzylinders (14) mechanisch modifiziert wird, wobei das metallische Material beispielsweise in situ mechanisch modifiziert wird.

8. Verfahren nach einem der Ansprüche 5 bis 7, wobei das Titan unbeschichtetes Titan oder ein Titan-Metallmatrix-Verbundwerkstoff ist.

## Revendications

1. Jambe à amortisseur (10) pour un ensemble train d'atterrissage, la jambe à amortisseur (10) incluant un cylindre creux (14) ayant une première surface d'appui (36) et un piston (12) ayant une seconde surface d'appui (27), le piston (12) étant configuré pour se déplacer dans le cylindre creux (14) de telle sorte que la seconde surface d'appui (27) glisse par rapport à la première surface d'appui (36), **caractérisée en ce qu'**une des première et seconde surfaces d'appui (27, 36) inclut un matériau non métallique et l'autre des première et seconde surfaces d'appui (27, 36) inclut du titane travaillé à froid, dans laquelle
le titane travaillé à froid est du titane bruni.

2. Jambe à amortisseur (10) selon la revendication 1, dans laquelle le titane travaillé à froid est du titane nu ou un composite à matrice métallique de titane.

3. Jambe à amortisseur (10) selon la revendication 1 ou la revendication 2, dans laquelle le titane bruni est du titane galeté ou du titane bruni à faible plasticité.

4. Ensemble train d'atterrissage incluant une jambe à amortisseur (10) selon l'une quelconque des revendications 1 à 3.

5. Méthode d'amélioration de la durée de vie d'une jambe à amortisseur (10) incluant un cylindre creux (14) ayant une première surface d'appui (36) et un piston (12) ayant une seconde surface d'appui (27), le piston (12) étant configuré pour se déplacer dans le cylindre creux (14) de telle sorte que la seconde surface d'appui (27) glisse par rapport à la première surface d'appui (36), dans laquelle une des première et seconde surfaces d'appui (27, 36) inclut un matériau non métallique et l'autre des première et seconde surfaces d'appui (27, 36) inclut un matériau métallique, la méthode incluant la modification de manière mécanique du matériau métallique, **caractérisée en ce que**
le matériau métallique est modifié de manière mécanique par travail à froid et le travail à froid est un brunissage et le matériau métallique inclut du titane.

6. Méthode selon la revendication 5, dans laquelle le brunissage est un galetage ou un brunissage à faible plasticité.

7. Méthode selon la revendication 5 ou la revendication 6, dans laquelle le matériau métallique est modifié de manière mécanique après la formation du cylindre creux (14), par exemple dans laquelle le matériau métallique est modifié de manière mécanique in situ.

8. Méthode selon l'une quelconque des revendications 5 à 7, dans laquelle le titane est du titane nu ou un composite à matrice métallique de titane.
